# DEMANDE DE BREVET EUROPEEN

(11) **EP 4 840 662 A1**
(43) Date de publication de la demande: **18.11.2026**
(21) Numéro de dépôt: 26171159.2
(22) Date de dépôt: 08.04.2026
(51) Int. Cl.: B60K 1/04

(54) **SYSTEME DE CAISSON PIVOTANT POUR UNE BATTERIE DE TRACTION DE VEHICULE AUTOMOBILE**

(30) Priorité: 15.05.2025 FR 2505150
(71) Demandeur: Stellantis Auto SAS, 78300 Poissy (FR); FCA US LLC, Auburn Hills, MI 48326-2766 (US)
(72) Inventeur: KOENIG, JOSEPH, 91190 GIF SUR YVETTE (FR); DERANLOT, CHRISTOPHE, 78380 BOUGIVAL (FR); TESSIER, JULIEN, 78700 CONFLANS STE HONORINE (FR)
(74) Mandataire: PSIP

(57) **Abrégé**

Système de caisson fermé contenant une batterie de traction d'un véhicule automobile, formant un ensemble plat sensiblement rectangulaire prévu pour être fixé sous un plancher du véhicule, ce système comportant sur un côté du caisson (2) un pivot (14) de liaison au plancher du véhicule, présentant un axe parallèle au plan du caisson (2), et comportant un dispositif de verrouillage (42) du caisson (2) dans sa position fixée sous le plancher.

## Description

La présente invention concerne un système de caisson pivotant pour une batterie de traction de véhicule automobile électrique ou hybride, ainsi qu'un véhicule automobile équipé de ce système de caisson et un procédé de mise en œuvre du système de caisson.

Un type de caisson de batterie connu, présenté notamment par le document WO-A1-2010094898, forme un ensemble plat disposé généralement sous le plancher de l'habitacle du véhicule contenant des cellules électrochimiques de stockage d'énergie électrique, et recevant généralement différents systèmes électriques de gestion de ces cellules ainsi qu'un système de régulation thermique comprenant une circulation de fluide.

Le caisson est supporté par deux arceaux fixés de manière pivotante sous le plancher du véhicule, de chaque côté de ce caisson, qui basculent chacun pour venir se fixer en dessous du caisson. Un moyen de manœuvre commun qui peut être automatisé permet de basculer en même temps les deux arceaux pour les écarter afin de détacher le caisson.

Ce type de caisson peut être manipulé par un système automatique pour effectuer un échange de batterie à un poste de charge, permettant d'installer de manière rapide une batterie rechargée. Il est prévu pour faciliter la dépose complète du caisson afin de le détacher complètement pour le changer.

Toutefois d'une manière générale les caissons de batterie peuvent faire l'objet d'opérations de maintenance ou de réparation intervenant sur ses équipements disposés à l'intérieur, accessibles en enlevant le couvercle du dessus qui est disposé juste en-dessous du plancher du véhicule. Dans ce cas il faut alors descendre le caisson afin d'accéder à son couvercle ce qui entraîne en particulier un débranchement des câbles et des canalisations arrivant dessus pour pouvoir le déposer complètement.

Une telle dépose du caisson nécessite un appareil de levage particulier pour recevoir le caisson présentant une masse importante, et le descendre en toute sécurité, ainsi que des temps de main-d'œuvre nécessaires pour effectuer tous les débranchements. A l'inverse sa repose nécessite à nouveau le même type d'appareil pour le soulever, puis des manœuvres d'ajustement pour qu'il retrouve précisément sa position sous le véhicule afin de mettre en œuvre ses fixations. Il faut enfin refaire les différents branchements. Ces opérations nécessitent un système de levage et des temps de main-d'œuvre qui entraînent des coûts

De plus les manipulations sur les branchements électriques et les raccords de fluide peuvent entraîner des risques de mauvais montage et d'usure des raccords pouvant entraîner des défaillances.

La présente invention a notamment pour but d'éviter ces problèmes de l'art antérieur.

Elle propose à cet effet un système de caisson fermé contenant une batterie de traction d'un véhicule automobile, formant un ensemble plat sensiblement rectangulaire prévu pour être fixé sous un plancher du véhicule, ce système de caisson étant remarquable en ce qu'il comporte sur un côté du caisson un pivot de liaison au plancher du véhicule, présentant un axe parallèle au plan du caisson, et comporte un dispositif de verrouillage du caisson dans sa position fixée sous le plancher.

Un avantage de système de caisson est qu'en installant sur un côté de ce caisson le pivot, après un décrochage du système de verrouillage, on peut de manière simple et rapide faire basculer le caisson autour de son axe de pivotement qui reste fixé sous le véhicule grâce à ce pivot. Il faut alors simplement accompagner le caisson dans son mouvement de descente, sans avoir à le guider ce qui facilite cette opération.

On obtient un caisson qui peut être disposé verticalement, présentant son couvercle sur un côté qui permet après sa dépose un accès complet à tous les équipements répartis sur sa surface. La repose du caisson s'effectue simplement par un basculement inverse autour de son pivot, sans nécessiter de guidage particulier de la masse importante de la batterie.

De plus des raccords électriques ou de fluides disposés à côté du pivot peuvent rester en place, sans nécessité de débranchement, en suivant le mouvement du caisson qui reste lié au véhicule grâce à ce pivot.

Le caisson de batterie selon l'invention peut comporter de plus une ou plusieurs des caractéristiques suivantes, qui peuvent être combinées entre elles.

Avantageusement, l'axe du pivot de liaison est disposé à l'avant du caisson suivant une direction transversale du véhicule.

Avantageusement, le pivot de liaison comporte une barre disposant de chaque côté d'une structure de liaison recevant des vis de fixation sous la caisse du véhicule.

Dans ce cas, avantageusement la barre du pivot de liaison reçoit de chaque côté un palier relié à l'avant du caisson.

De plus, avantageusement chaque palier permet un petit mouvement de rotule autour de l'axe du pivot.

Avantageusement, le système de caisson comporte des vérins fixés entre la caisse du véhicule et le caisson, qui appliquent une force de remontée de ce caisson vers sa position de fonctionnement.

Avantageusement, le caisson comporte des départs de câbles électriques ou de canalisations de fluide de refroidissement souples disposés à côté de l'axe du pivot, permettant un mouvement de ce caisson sans les débrancher.

Avantageusement, le dispositif de verrouillage est fixé sur un côté du caisson disposé à l'opposé du pivot.

L'invention a aussi pour objet un véhicule automobile électrique ou hybride comportant une batterie électrique de traction, remarquable en ce que cette batterie est disposée dans un système de caisson comprenant l'une quelconque des caractéristiques précédentes.

L'invention a de plus pour objet un procédé de mise en œuvre d'un système de caisson d'un véhicule automobile suivant la caractéristique précédente, remarquable en ce qu'il comporte une étape d'ouverture du dispositif de déverrouillage, puis une étape de basculement du caisson jusqu'à une position sensiblement verticale.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente un système de caisson selon l'invention vu de dessous ;
[Fig. 2] présente ce système de caisson vu de côté ;
[Fig. 3] est une vue de détail du pivot avant de ce caisson vu de dessous ; et
[Fig. 4] est une vue de côté du caisson basculé vers le bas.

Dans l'ensemble du document la direction supérieure ou dessus est relative à un véhicule posé sur un sol horizontal, la direction avant AV est relative au sens de marche du véhicule suivant son axe longitudinal, et la direction transversale est perpendiculaire à cet axe longitudinal.

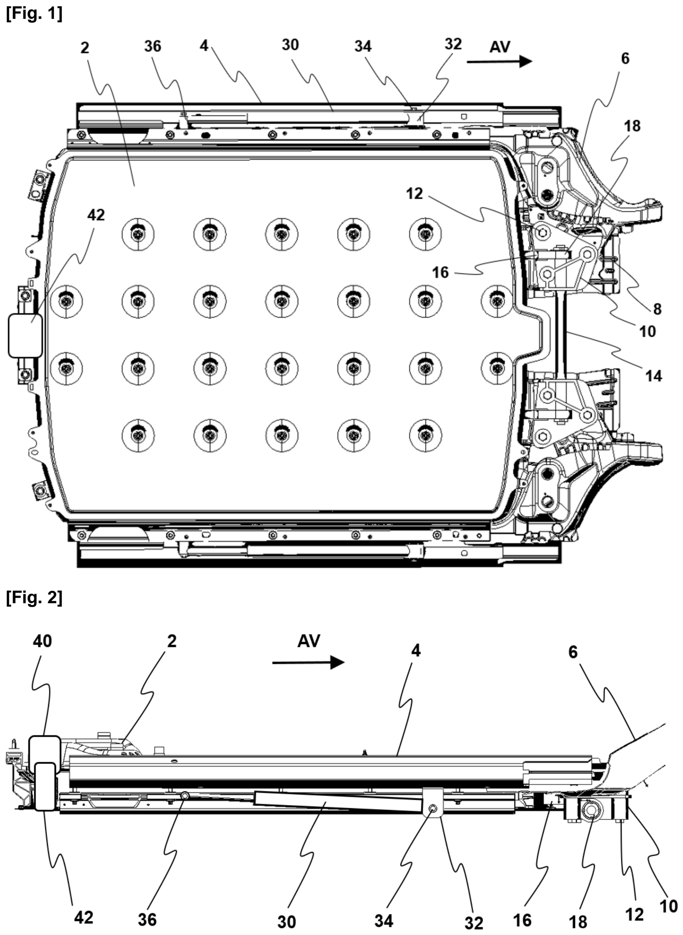

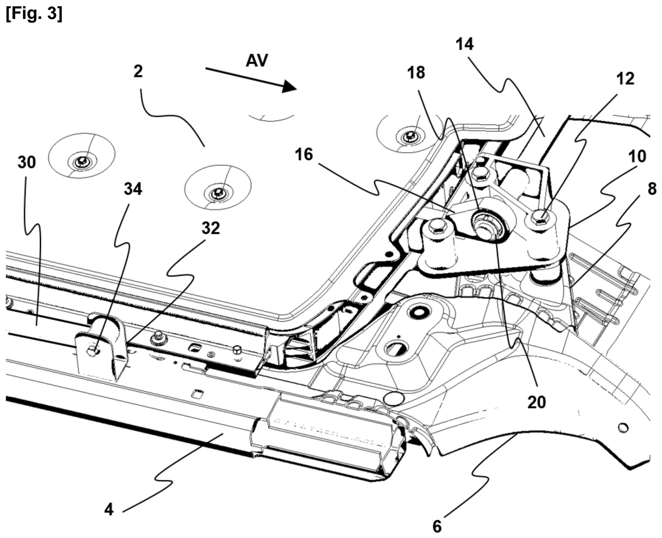

Les figures 1, 2 et 3 présentent un caisson de batterie 2 formant un ensemble plat sensiblement rectangulaire, ajusté entre deux longerons latéraux 4 formant les bas de caisse au niveau de l'habitacle, qui encadrent ce caisson en le protégeant contre les chocs latéraux.

Chaque longeron latéral 4 se prolonge vers l'avant par une structure avant 6 formant le départ d'un longeron du compartiment moteur, recevant sur le côté, vers l'intérieur du véhicule, une tôle de renfort 8 pour la fixation du berceau avant non représenté. La tôle de renfort 8 est disposée dans l'épaisseur du caisson de batterie 2.

Chaque tôle de renfort 8 reçoit en dessous une structure de liaison 10 formée par une pièce moulée, présentant trois parties cylindriques verticales reliées par des nervures, disposant chacune d'un perçage axial recevant une vis 12 vissée sur la tôle de renfort 8. Une barre ronde 14 disposée transversalement en avant du caisson 2, relie les deux structures de liaison 10 pour former un ensemble rigide fixé dans l'épaisseur de ce caisson.

La face avant du caisson 2 comporte deux bras parallèles tournés vers l'avant 16, se terminant chacun par un palier 18 recevant une extrémité de la barre transversale 14 pour former un pivot de basculement. Chaque extrémité de la barre transversale 14 reçoit après le palier 18 un écrou présentant des crans extérieurs 20 assurant la liaison axiale sur ce palier. On obtient un mécanisme de pivotement de l'ensemble du caisson 2 autour de l'axe de la barre 14 et des paliers 18, permettant un basculement complet de ce caisson vers le bas.

Avantageusement chaque palier 18 comporte un roulement disposant d'un petit mouvement de rotule qui permet d'absorber des défauts d'alignement des deux paliers 18 des bras 16 dus à des dispersions de fabrication ou à des flexibilité élastiques lors des manipulations du caisson 2 présentant une masse importante, ce qui évite d'ajouter des contraintes mécaniques dans le dispositif de pivotement.

Le caisson 2 comporte des départs de câbles électriques et de canalisations de fluide de refroidissement non représentés, se trouvant sur sa face avant près de la barre transversale 14, qui assurent les échanges électriques et thermiques avec les équipements fixes du véhicule. Les départs des câbles électriques et des canalisations souples permettent un basculement du caisson 2 autour de l'axe de la barre transversale 14, sans avoir à les débrancher.

Chaque côté du caisson 2 reçoit en dessous du longeron latéral 4 un vérin à gaz 30 disposé parallèlement à ce longeron, présentant une extrémité avant fixé par une chape 32 au longeron avec un axe de pivotement transversal 34, et une extrémité arrière 36 fixée aussi par un axe de pivotement transversal sur le côté du caisson.

Un dispositif de verrouillage du caisson 2 comportant un verrou fixé sous la caisse du véhicule 40 recevant un élément de verrouillage mobile 42 fixé à l'arrière de ce caisson, permettant une fixation solide de l'arrière du caisson, peut se déverrouiller par une action manuelle dans le cas d'un dispositif à commande mécanique ou par une action commandée à distance dans le cas d'un dispositif automatisé.

De cette manière en position de fonctionnement le caisson 2 est rigidement fixé sous l'habitacle du véhicule par ses deux bras avant 16 maintenus par la barre transversale 14 qui lui assure un positionnement précis, et par le dispositif de verrouillage arrière qui supporte le poids arrière de ce caisson.

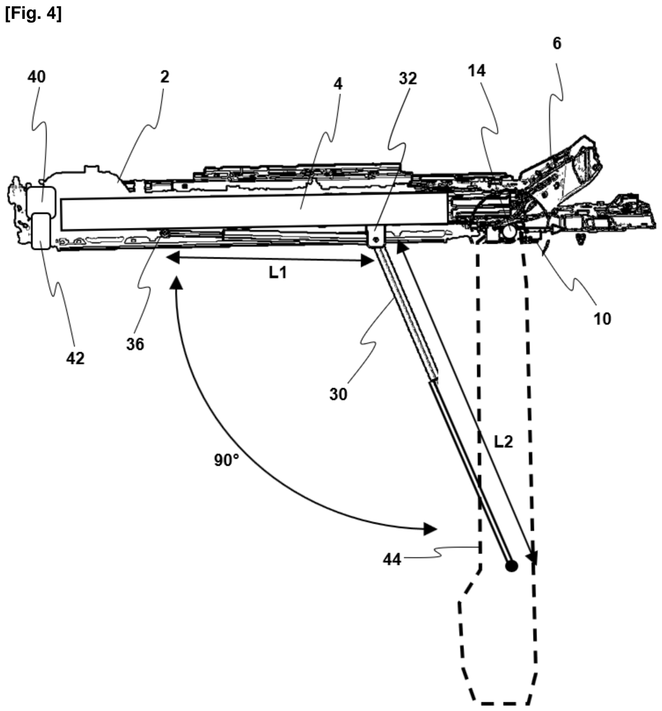

La figure 4 présente le caisson 2 après une ouverture du dispositif de verrouillage arrière permettant un pivotement vers le bas de ce caisson qui termine dans une position sensiblement verticale.

L'axe de pivotement avant 34 des vérins 30 étant disposé en arrière de l'axe de la barre transversale 14, sensiblement à la même hauteur, lors de la descente du caisson 2 ces vérins subissent un étirement d'une longueur L1 vers une longueur L2 qui comprime le gaz intérieur en supportant au moins en partie le poids de ce caisson. On obtient une descente contrôlée du caisson 2 présentant une masse importante, sans utiliser de système de soulèvement, qui reste guidé en permanence par son basculement suivant l'axe de la barre transversale 14.

Les câbles électriques et les canalisations souples de l'avant du caisson 2 suivent le mouvement de ce caisson sans intervenir dessus.

La position verticale du caisson 2 permet de déposer le couvercle supérieur de ce caisson 44 qui devient accessible, puis d'intervenir facilement à l'intérieur sur la totalité des équipements répartis sur sa surface pour des opérations de maintenance ou de réparation.

Après l'intervention l'opérateur soulève le caisson 2 aidé par les vérins 30 qui exercent une traction sur ce caisson en supportant une partie de son poids. Le guidage avant du caisson 2 formé par les deux paliers espacés 18 donne un mouvement précis de ce caisson lors de sa remontée, qui en fin de course assure l'emboîtement de l'élément de verrouillage mobile 42 sur le verrou fixe 40 le recevant.

On obtient après une action manuelle ou automatisée sur le verrou 40 une remise en position et en fonctionnement du caisson 2 qui est rapide, sans utiliser d'outillage de levage complexe.

## Revendications

1. Système de caisson fermé contenant une batterie de traction d'un véhicule automobile, formant un ensemble plat sensiblement rectangulaire prévu pour être fixé sous un plancher du véhicule, **caractérisé en ce qu'**il comporte sur un côté du caisson (2) un pivot (14) de liaison au plancher du véhicule, présentant un axe parallèle au plan du caisson (2), et comporte un dispositif de verrouillage (42) du caisson (2) dans sa position fixée sous le plancher.

2. Système de caisson selon la revendication 1, **caractérisé en ce que** l'axe du pivot de liaison (14) est disposé à l'avant du caisson (2) suivant une direction transversale du véhicule.

3. Système de caisson selon la revendication 1 ou 2, **caractérisé en ce que** le pivot de liaison (14) comporte une barre disposant de chaque côté d'une structure de liaison (10) recevant des vis (12) de fixation sous la caisse du véhicule.

4. Système de caisson selon la revendication 3, **caractérisé en ce que** la barre du pivot de liaison (14) reçoit de chaque côté un palier (18) relié à l'avant du caisson (2).

5. Système de caisson selon la revendication 4, **caractérisé en ce que** chaque palier (18) permet un petit mouvement de rotule autour de l'axe du pivot (14).

6. Système de caisson selon l'une quelconque des revendications précédentes, **caractérisé en ce qu'**il comporte des vérins (30) fixés entre la caisse du véhicule et le caisson (2), qui appliquent une force de remontée de ce caisson (2) vers sa position de fonctionnement.

7. Système de caisson selon l'une quelconque des revendications précédentes, **caractérisé en ce que** le caisson (2) comporte des départs de câbles électriques ou de canalisations de fluide de refroidissement souples disposés à côté de l'axe du pivot (14), permettant un mouvement de ce caisson (2) sans les débrancher.

8. Système de caisson selon l'une quelconque des revendications précédentes, **caractérisé en ce que** le dispositif de verrouillage (42) est fixé sur un côté du caisson (2) disposé à l'opposé du pivot (14).

9. Véhicule automobile électrique ou hybride comportant une batterie électrique de traction, **caractérisé en ce que** cette batterie est disposée dans un système de caisson (2) selon l'une quelconque des revendications précédentes.

10. Procédé de mise en œuvre d'un système de caisson d'un véhicule automobile selon la revendication 9, **caractérisé en ce qu'**il comporte une étape d'ouverture du dispositif de déverrouillage (42), puis une étape de basculement du caisson (2) jusqu'à une position sensiblement verticale.
